(19) Europäisches Patentamt
European Patent Office
Office européen des brevets

(11) **EP 2 483 731 B1**

(12) **EUROPÄISCHE PATENTSCHRIFT**

(45) Veröffentlichungstag und Bekanntmachung des Hinweises auf die Patenterteilung:
**24.02.2021 Patentblatt 2021/08**

(21) Anmeldenummer: **10752356.5**

(22) Anmeldetag: **13.09.2010**

(51) Int Cl.:
**G02B 7/36** (2021.01)    **G02B 21/24** (2006.01)

(86) Internationale Anmeldenummer:
**PCT/EP2010/063410**

(87) Internationale Veröffentlichungsnummer:
**WO 2011/039049 (07.04.2011 Gazette 2011/14)**

(54) **AUTOMATISCHES FOKUSSIERVERFAHREN FÜR EIN OPTISCHES INSTRUMENT ZUM VERGRÖSSERTEN BETRACHTEN EINES OBJEKTES**

AUTOMATIC FOCUSING METHOD FOR AN OPTICAL INSTRUMENT FOR MAGNIFIED VIEWING OF AN OBJECT

PROCÉDÉ DE FOCALISATION AUTOMATIQUE POUR UN INSTRUMENT OPTIQUE PERMETTANT UNE OBSERVATION AGRANDIE D'UN OBJET

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **29.09.2009 DE 102009045107**

(43) Veröffentlichungstag der Anmeldung:
**08.08.2012 Patentblatt 2012/32**

(73) Patentinhaber: **Carl Zeiss Microscopy GmbH 07745 Jena (DE)**

(72) Erfinder: **EICHINGER, Markus 82299 Türkenfeld (DE)**

(74) Vertreter: **Patentanwälte Geyer, Fehners & Partner mbB
Perhamerstrasse 31
80687 München (DE)**

(56) Entgegenhaltungen:
**EP-A2- 0 111 635       WO-A1-00/75709
FR-A1- 2 605 751       US-A1- 2008 151 097
US-A1- 2009 207 298**

- **GROEN F C A , ET AL: "A Comparison of Different Focus Functions for Use in Autofocus Algorithm", CYTOMETRY, Bd. 6, 1985, Seiten 81-91, XP002613738,**
- **DÄHNE C ET AL: "A microscope focusing technique for a digital image analysing system", OPTIK, WISSENSCHAFTLICHE VERLAG GMBH, DE, Bd. 55, Nr. 4, 1. Mai 1980 (1980-05-01), Seiten 437-448, XP001653685, ISSN: 0030-4026**

**Beschreibung**

Die vorliegende Erfindung betrifft ein Fokussierverfahren für ein optisches Instrument zum vergrößerten Betrachten eines Objektes, wobei das Instrument eine Instrumentenoptik, eine Einstelleinheit zur Einstellung der Fokuslage bei Betrachtung des Objekts mittels der Instrumentenoptik sowie eine Aufnahmeeinheit, die das Objekt mittels der Instrumentenoptik aufnimmt, aufweist. Ein solches Instrument ist beispielsweise ein Mikroskop.

Zur Fokussierung wird häufig eine Schärfefunktion bzw. ein Schärfefunktional mit der Fokuslage als Variablen auf Aufnahmen mit unterschiedlichen Fokuslagen angewendet. Das Schärfefunktional liefert dann für jede Fokuslage einen Schärfewert. Nachdem im allgemeinen im voraus nicht bekannt ist, wie hoch der Schärfewert an der optimalen Fokusposition ist, wird häufig ein Vergleich mit Schärfewerten an anderen Fokuspositionen durchgeführt, um zu ermitteln, in welche Richtung man die Fokuslage ändern muß, um zur optimalen Fokuslagen zu kommen.

Jedoch besteht die Schwierigkeit, daß bei einem größeren Abstand der Fokuslage der Aufnahme das Schärfefunktional häufig Nebenmaxima, die durch Störungen bei der Aufnahme oder optische Effekte bedingt sein können, aufweist. Daher kann es vorkommen, daß ein solches Nebenmaxima als optimale Fokuslage angesehen wird, so daß eine gute Fokussierung nicht erreicht wird.

Die WO 00/75709 A1 zeigt ein Fokussierverfahren der eingangs genannten Art. Die US 2009/0207298 A1 beschreibt ein Fokussierverfahren für Fotogeräte oder Videogeräte, wenn mehrere Objekte im Bild sind. Es werden die verschiedenen Objekte identifiziert und ihre Fokuslage bestimmt, um dann auf die Objekte zu fokussieren, die in der Überzahl sind. Die US 2008/0151097 A1 beschreibt ein Fokussierverfahren der eingangs genannten Art, wobei verschiedene Fokusfunktionen beschrieben sind, von denen für einen Fokussierschritt jeweils eine ausgewählt wird.

Groen, et al., "A Comparison of Different Focus Functions for Use in Autofocus Algorithms", Cytometrie, Band 6, 1985, Seiten 81-91, beschreibt einen Vergleich von unterschiedlichen Autofokussierungsalgorithmen, um den Algorithmus auszuwählen, der am besten für ein Echtzeit-Videoaufnahmesystem geeignet ist. Dähne et al., "A microscope focusing technique for a digital image analysing system", Optik, Wissenschaftliche Verlagsgesellschaft mbH, Deutschland, Band 55, Nr. 4, 1. Mai 1980, Seiten 437-448, FR 2 605 751 A1 und EP 0 111 635 A2 beschreiben weitere Fokussierverfahren.

Ausgehend hiervon ist es Aufgabe der Erfindung, ein Fokussierverfahren für ein optisches Instrument zur vergrößerten Betrachtung eines Objektes bereitzustellen, mit dem eine bessere Fokussierung möglich ist.

Die Erfindung ist im Anspruch 1 und im Anspruch 2 definiert.

Insbesondere ist das erfindungsgemäße Fokussierverfahren als Autofokussierverfahren ausgebildet.

Durch die Verwendung von mehreren unterschiedlichen Schärfefunktionen wird eine deutlich bessere Fokussierung möglich, da davon ausgegangen werden kann, daß nicht jede Schärfefunktion falsche Schärfefunktions-Änderungsrichtungen liefert, selbst wenn die zumindest zwei Aufnahmen im Fernfokusbereich der jeweiligen Schärfefunktion liegen. Da alle Schärfefunktions-Änderungsrichtungen bei der Bestimmung der Hauptänderungsrichtung berücksichtigt werden, hat man eine bessere Entscheidungsgrundlage, um die richtige Hauptänderungsrichtung zu bestimmen.

Da im Schritt b) die Schärfefunktions-Änderungsrichtungen mittels einer Gradientenberechnung bestimmt werden, läßt sich schnell die jeweilige Schärfefunktions-Änderungsrichtung bestimmen.

Im Schritt c) wird durch eine Mehrheitsentscheidung oder eine gewichtete Mehrheitsentscheidung unter allen Schärfefunktions-Änderungsrichtungen die Hauptänderungsrichtung bestimmt. Dies ist einfach zu implementieren und führt zu einer Hauptänderungsrichtung, die mit großer Wahrscheinlichkeit richtig ist.

Bei dem Verfahren wird im Schritt c) basierend auf allen Schärfefunktions-Änderungsrichtungen ermittelt, ob die Fokuslagen der zumindest zwei Aufnahmen im Fernfokusbereich oder im Nahfokusbereich liegen, und dies beim weiteren Fokussieren berücksichtigt werden.

Durch dieses Vorgehen kann leicht ermittelt werden, ob die eingestellte Fokuslage im Fernfokus- oder im Nahfokusbereich liegt und kann die Fokussierung entsprechend daran angepaßt werden.

So wird im Fernfokusbereich die Schrittweite zur Änderung der Fokuslage für weitere Aufnahmen größer eingestellt als im Nahfokusbereich. Damit kann einerseits die Fokussierung beschleunigt werden, da man schneller in den Nahfokusbereich gelangt und somit auch schneller die optimale Fokuslage findet. Ferner ist eine größere Schrittweite im Fernfokusbereich von Vorteil, da dann die unerwünschten Nebenmaxima einen geringeren Einfluß bei der Bestimmung der Schärfefunktions-Änderungsrichtungen haben.

Die Schrittweite kann beispielsweise nach Abhängigkeit der Schärfentiefe der Instrumentenoptik festgelegt werden. So kann im Fernfokusbereich beispielsweise eine Schrittweite im Bereich von einer vierfachen bis sechsfachen Schärfentiefe gewählt werden. Im Nahfokusbereich kann eine Schrittweite von der Hälfte der Schärfentiefe bis zum zweifachen der Schärfentiefe gewählt werden.

Ferner ist es möglich, im Nahfokusbereich und Fernfokusbereich unterschiedliche Schärfefunktionen einzusetzen. Insbesondere kann die Anzahl der Schärfefunktionen im Nahfokusbereich geringer sein als im Fernfokusbereich.

Die Anzahl der Schärfefunktionen ist bevorzugt größer als 2, insbesondere 3, 4, 5 oder noch größer.

Ferner kann man, wenn man den Fernfokusbereich ermittelt, detektierte Extrema als Nebenextrema werten und die Hauptänderungsrichtung beim Fokussieren beibehalten.

Wenn man erkennt, daß man im Nahfokusbereich ist, kann man die Fokussierung so lange weiterführen, bis man aus der Auswertung der Schärfefunktionen feststellt, daß man ein Extremum überschritten hat. Anhand der dann ermittelten Schärfefunktionswerte kann in bekannter Art und Weise die Position des Extremums ermittelt werden. Insbesondere kann ein Parabelfit oder ein Fit einer anderen geeigneten Funktion durchgeführt werden.

Ferner ist es möglich, aus zumindest zwei oder bevorzugt zumindest drei Fokuslagen um das ermittelte Extremum herum für jede Schärfefunktion ein gewichtetes Schärfemaß zu bestimmen. Die gewichteten Schärfemaße dienen dann als Stützpunkte für einen Parabelfit oder einen Fit einer anderen Funktion um daraus die exakte Lage des Extremums zu bestimmen.

Die Schritte a) - c) können wiederholt durchgeführt werden, um so das Extremum (= optimale Fokuslage) zu ermitteln.

Bei Anwendung der Schärfefunktionen kann jeweils die gesamte Aufnahme berücksichtigt werden oder auch vorbestimmte Unterbereiche davon.

Mit dem optischen Instrument gemäß Anspruch 2 kann sicher eine Fokussierung, insbesondere eine Autofokussierung, durchgeführt werden.

Das optische Instrument kann insbesondere so weitergebildet werden, daß das erfindungsgemäße Fokussierverfahren sowie seine Weiterbildungen durchführbar sind.

Bei dem optischen Instrument kann es sich insbesondere um ein Fernrohr oder ein Mikroskop handeln. Das Mikroskop kann als Fluoreszenzmikroskop, als Mehrkanal-Fluoreszenzmikroskop, als Phasenkontrastmikroskop oder als sonstiges Mikroskop ausgebildet sein. Die Aufnahmeeinheit kann eine Kamera, z. B. eine CCD-Kamera umfassen. Es ist jedoch auch möglich, daß die Aufnahmeeinheit als Punkt-Scanner (Punktaufnahme) oder Linien-Scanner ausgebildet ist. In diesem Fall ist das Mikroskop bevorzugt ein Laser-Scanning-Mikroskop. Die Auswerte- und Steuereinheit kann durch die Steuereinheit des Mikroskops selbst verwirklicht sein oder zumindest teilweise als separate Einheit ausgebildet sein. Bei dem zu betrachtenden Objekt kann es sich insbesondere um medizinische und/oder biologische Proben handeln.

Es versteht sich, daß die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:

Fig. 1 eine schematische Darstellung einer Ausführungsform des erfindungsgemäßen optischen Instrumentes;

Fig. 2 eine schematische Darstellung des tatsächlichen Verlaufs eines ersten Schärfefunktionals S1;

Fig. 3 eine vergrößerte Darstellung des Details C von Fig. 2;

Fig. 4 eine schematische Darstellung des tatsächlichen Verlaufs eines zweiten Schärfefunktionals S2;

Fig. 5 eine vergrößerte Ansicht des Details C von Fig. 4;

Fig. 6 eine schematische Darstellung des tatsächlichen Verlaufs eines dritten Schärfefunktionals S3, und

Fig. 7 eine vergrößerte Ansicht des Details C von Fig. 6.

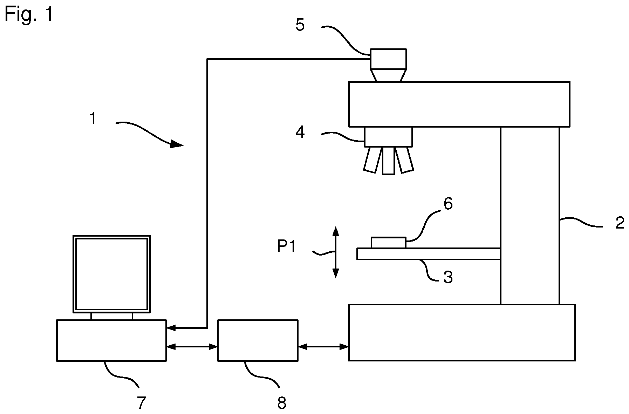

Bei der in Fig. 1 gezeigten Ausführungsform ist das erfindungsgemäße optische Instrument 1 als Mikroskop ausgebildet und umfaßt ein Stativ 2 mit einem Probentisch 3 sowie eine Mikroskopoptik 4, für die schematisch ein Objektivrevolver mit drei Objektiven eingezeichnet ist. Der Abstand zwischen Mikroskopobjektiv 4 (Objektivrevolver) und Probentisch 3 ist zur Einstellung der Fokuslage bzw. zur Fokussierung (z-Position) veränderbar, wie durch den Doppelpfeil P1 in Fig. 1 angedeutet ist.

Das Mikroskop 1 umfaßt ferner eine Aufnahmeeinheit 5 (beispielsweise eine CCD-Kamera), mit der das vergrößerte Bild einer zu untersuchenden Probe 6 aufgenommen werden kann. Die Aufnahmeeinheit 5 ist mit einem schematisch dargestellten Computer 7 verbunden, der im Betrieb das Mikroskop 1 über ein Steuermodul 8 steuert.

Um eine Autofokussierung durchzuführen, wird die zu untersuchende Probe 6 zunächst in zwei unterschiedlichen Fokuslagen aufgenommen und die Aufnahme werden dem Computer 7 zugeführt. Der Computer 7 wendet auf jede Aufnahme mehrere unterschiedliche Schärfefunktionen bzw. Schärfefunktionale S1, S2 und S3 an, um anhand der berechneten Schärfefunktionalwerten die Autofokussierung durchzuführen, wie nachfolgend im Detail beschreibend wird. Der Computer 7 bildet zusammen mit dem Steuermodul 8 eine Auswerte- und Steuereinheit.

Die Schärfefunktionale S liefern ein skalares Schärfemaß, da in der Rechenvorschrift des jeweiligen Schärfefunktionals über die beiden Aufnahmedimensionen der zweidimensionalen Aufnahme summiert bzw. integriert wird. Daher hängt das skalare Schärfemaß bei gegebenem Bildabschnitt im wesentlichen nur noch von z (Fokuslage) ab.

Die hier verwendeten Schärfefunktionale weisen als absolutes Extremum ein Maximum auf und sollten für die automatische Fokussierung folgende Eigenschaften aufweisen. Das Funktional sollte an derjenigen z-Position das Maximum aufweisen, welche visuell der schärfsten Einstellung entspricht (Präzision). Das Funktional sollte ferner bei gegebenem Bildausschnitt ein eindeutiges Maximum aufweisen (Unimodalität). Die nähere Umgebung des Maximums sollte so beschaffen sein, daß der Extremalwert gut ermittelt werden kann (Reproduzierbarkeit). Das Funktional sollte ferner so beschaffen sein, daß auch bei z-Positionen, die weit vom Fokus (optimale Fokuslage) entfernt sind, die z-Richtung, in welche die Aufnahmen schärfer werden, eindeutig ermittelt werden kann (Einzugsbereich). Das Funktional sollte für eine möglichst große Klasse von Bildinhalten und Aufnahmetechniken einsetzbar sein (Allgemeinheit). Schließlich sollte das Funktional möglichst unempfindlich gegenüber Störeinflüssen (z. B. Schwankungen in Beleuchtung oder Änderung des Bildinhaltes) sein (Robustheit).

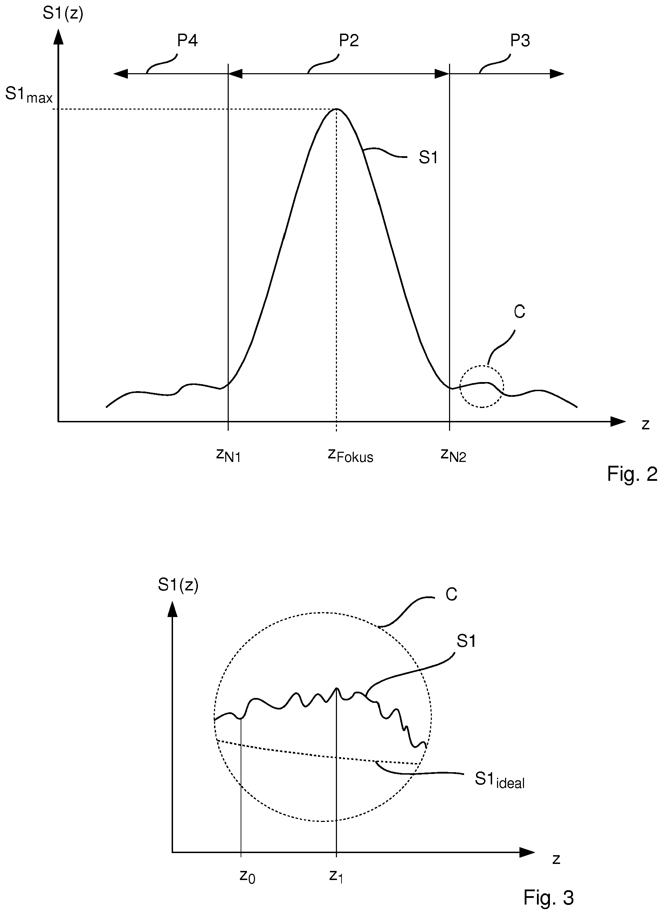

In Figur 2 ist schematisch der tatsächliche Verlauf des ersten Schärfefunktionals S1 dargestellt. Dieser Verlauf läßt sich in zwei Bereich einteilen.

Es gibt einen Bereich (Doppelpfeil P2), in dem das erste Schärfefunktional $S1(z)$ monoton zum Hauptmaximum ($S1_{max}$) hin ansteigt oder abfällt und der das Haupt- bzw. Schärfemaximum $S1_{max}$ enthält. In diesem Bereich, der z-Werte (= Fokuslagen) von $z_{N1}$ bis $z_{N2}$ umfaßt und der nachfolgend als Nahfokusbereich bezeichnet wird, ist die Forderung nach Präzision, Unimodalität, Reproduzierbarkeit, Allgemeinheit und Robustheit gut erfüllt.

Zu beiden Seiten schließen an den Nahfokusbereich Abschnitte (Pfeile P3 und P4; z-Werte kleiner als $z_{N1}$ oder größer als $z_{N2}$) an, die zusammen nachfolgend als Fernfokusbereich bezeichnet werden. Dieser Fernfokusbereich ist empfindlich auf Störungen und es gibt lokale Nebenmaxima, wie in der Darstellung in Figur 2 schematisch gezeigt ist. Dieser Umstand macht eine Fokussierung insbesondere dann schwierig, wenn man im Fernfokusbereich die anfänglichen zwei Aufnahmen zur Autofokussierung aufnimmt.

In Figur 3 ist der ideale Verlauf des Schärfefunktionals S1 gestrichelt gezeigt und mit $S1_{ideal}$ bezeichnet. Dieser ideale Verlauf wird tatsächlich aber nicht erreicht, da z. B. im Fernfokusbereich die Bedingung nach Unimodalität nicht erfüllt ist und die dargestellten Nebenmaxima auftreten. Ursachen hierfür sind Störungen, wie zum Beispiel Schwankungen in der Beleuchtung, die Dicke der Probe, Schmutzpartikel aus anderen z-Ebenen und/oder Kamerarauschen. Im Nahfokusbereich sind im Prinzip die gleichen Störeinflüsse vorhanden, jedoch ist die Steigung des Schärfefunktionals im Nahfokusbereich so groß, daß die Störungen nicht ins Gewicht fallen. Das Signal-Rausch-Verhältnis ist im Nahfokusbereich also deutlich besser als im Fernfokusbereich.

Ferner besteht grundsätzlich die Schwierigkeit, daß es kein Schärfefunktional gibt, das ein absolutes, vom Bildinhalt unabhängiges Maß für die Bildschärfe liefert. Der Schärfewert, den ein Schärfefunktional liefert, hängt somit in der Regel vom Bildinhalt ab, insbesondere zum Beispiel von der Bildhelligkeit.

Man hat also im allgemeinen folgende Situation. Wenn man den Schärfewert $S1_0 = S1(z_0)$ in der Startposition $z_0$ berechnet, hat man keinen Hinweis darauf, ob man sich im Fernfokusbereich, im Nahfokusbereich oder sogar im Fokus selbst befindet. Man hat im allgemeinen auch keinen Hinweis darauf, wie hoch der Wert $S1_{max}$ an der Fokusposition $z_{Fokus}$ ist. Nur durch einen Vergleich mit Schärfewerten $S1(z_I)$ an anderen z-Positionen $z_I$ kann man einen Hinweis darauf erhalten, ob man sich im Fokus befindet oder in welche z-Richtung man die Probe 6 oder die Mikroskopoptik 4 bewegen muß, um dem Fokuspunkt näher zu kommen.

Als natürliches Maß für die z-Schrittweite kann die Schärfentiefe der verwendeten Mikroskopoptik 4 angesehen werden. Wählt man die Schrittweite deutlich kleiner als die Schärfentiefe T, so benötigt man sehr viele Schritte, um das Maximum zu erreichen. Außerdem läuft man vor allem im Fernfokusbereich Gefahr, ein kleineres Nebenmaximum für das optimale Hauptmaximum zu erhalten. Wählt man die Schrittweite deutlich größer als die Schärfentiefe, so läuft man Gefahr, das optimale Hauptmaximum zu überspringen. Außerdem besteht bei zu großen Schrittweiten ferner die Gefahr, daß die Probe 6 und die Mikroskopoptik 4 kollidieren, wenn die Suche nicht konvergiert. Typischerweise wählt man eine Schrittweite K zum Erforschen der Schärfelandschaft im Bereich von 0,5 T bis 2 T.

Bei dem hier eingesetzten Gradientenaufstiegsverfahren wird ausgehend von der Startposition (die in der vergrößerten Darstellung des Details C von Fig. 2 in Figur 3 als $z_0$ bezeichnet ist) versucht, die z-Richtung herauszufinden, in der das Bild schärfer wird. Dazu wird für die erste Aufnahme bei $z_0$ (erste Fokuslage) und für die zweite Aufnahme bei $z_1$ (zweite Fokuslage) jeweils der skalare Schärfewert des ersten Schärfefunktionals S1 berechnet und basierend auf den Schärfewerten und dem Abstand zwischen $z_0$ und $z_1$ wird die Steigung bestimmt. Die so bestimmte Steigung sollte die Richtung angeben, in der das absolute Maximum des Schärfefunktionals S1 liegt.

Wie aus der Darstellung von Figur 3 ersichtlich ist, wird jedoch ein Anstieg von links nach rechts ermittelt, so daß das Hauptmaximum in Richtung zu größeren z-Werten gesucht werden würde, was aber die falsche Richtung ist.

Im Nahfokusbereich würde ein in gleicher Weise ermittelter Gradient nicht in die falsche Richtung weisen, da die Störeinflüsse zu gering sind im Vergleich zur Steigung des Schärfefunktionals im Nahfokusbereich. Bei dem verwendeten Gradientenverfahren ist es somit wesentlich festzustellen, ob man sich im Nah- oder Fernfokusbereich befindet. Falls man sich im Fernfokusbereich befindet, muß sichergestellt werden, daß man in der richtigen Richtung das Hauptmaximum sucht. Dies wird erfindungsgemäß wie folgt erreicht.

Der Computer 7 wendet bei dem erfindungsgemäßen Mikroskop nicht nur das erste Schärfefunktional S1, sondern, wie bereits erwähnt, eine Gruppe von mehreren Schärfefunktionalen (hier die drei Schärfefunktionale S1, S2, S3) bei jeder Aufnahme an, so daß man ein Tupel M an Schärfemaßen S1(z), S2(z), S3(z) für jede Aufnahme erhält. Durch Berechnung der Schärfemaße an zwei z-Positionen kann für jede z-Position und für jedes Funktional S1, S2, S3 ein Gradient $Gi(z) = Si(z_1) - Si(z_0) / (z_1 - z_0)$ berechnet werden (mit i = 1, 2, 3). Das Vorzeichen jedes Gradienten Gi gibt an, in welcher z-Richtung (Schärfefunktions-Änderungsrichtung) das Hauptmaximum liegt, wenn man von der Unimodalität der Schärfefunktionale S1, S2, S3 ausgehen könnte.

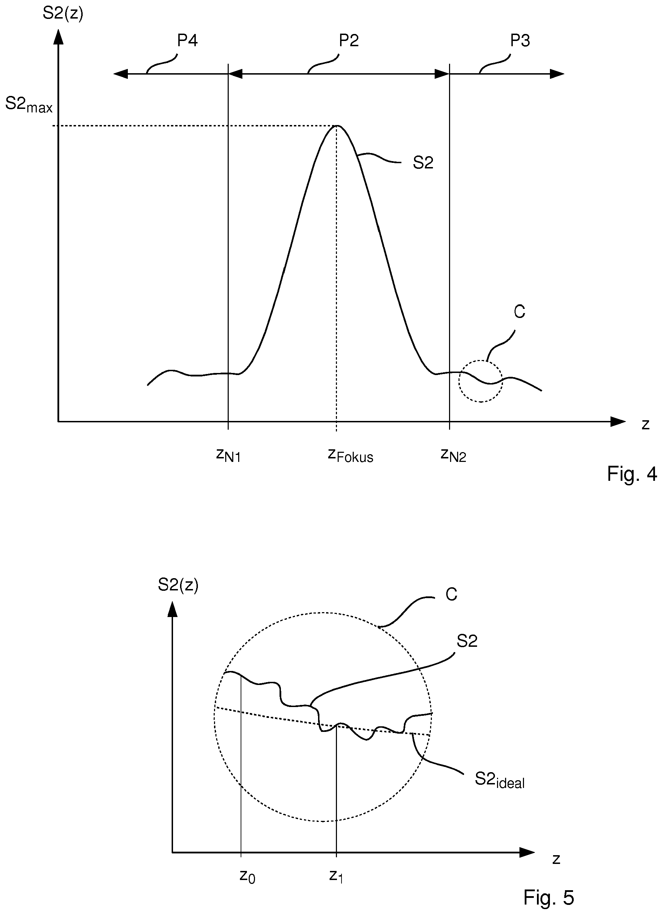

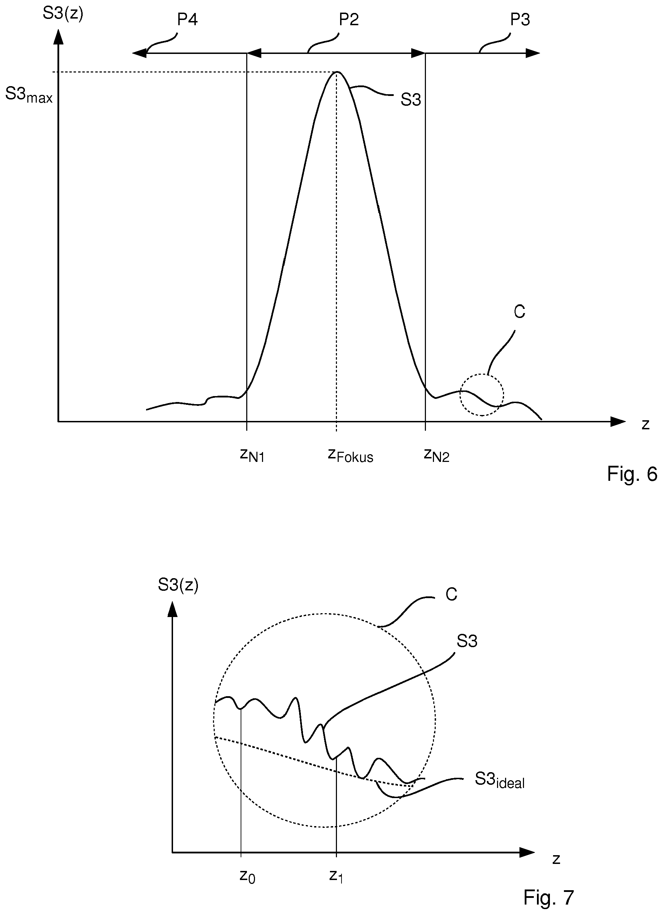

Da dies jedoch im Fernfokusbereich, wie bereits ausgeführt wurde, nicht immer der Fall ist, wird erfindungsgemäß die Richtung ausgewählt, in die die meisten Gradienten Gi der Schärfemaße des Tupels M weisen. Man führt somit eine Mehrheitsentscheidung durch und erhält eine deutlich verbesserte Entscheidungsgrundlage für die Richtung (Hauptänderungsrichtung), in der die Fokusposition liegt. In den Figuren 4 und 5 sowie 6 und 7 sind jeweils in der gleichen Weise wie in den Figuren 2 und 3 schematisch Schärfefunktionale S2 und S3 dargestellt. Wie sich den Darstellungen (insbesondere Figuren 3, 5 und 7) entnehmen läßt, weist der Gradient G1 in die falsche Richtung und weisen die Gradienten G2 und G3 in die richtige Richtung, so daß bei der beschriebenen Mehrheitsentscheidung die richtige Richtung zur Fokussierung gewählt wird. Wenn die Richtung in dieser Art und Weise bestimmt ist, wird die Fokuslage um die festgelegte Schrittweite K geändert und eine weitere Aufnahme erstellt. Dann wird wieder die Richtung bestimmt. Wenn alle Gradienten in die gleiche Richtung zeigen (z. B. x mal nacheinander bei x Änderungen der Fokuslage), kann man davon ausgehen, sich im Nahfokusbereich zu befinden. Sobald sich bei weiteren Änderungen der Fokuslage die Richtung aller Gradienten ändert, kann angenommen werden, daß das absolute Maximum überschritten wurde. Damit kann die Lage des absoluten Maximums (optimale Fokuslage) bestimmt werden.

Die Schärfefunktionale in dem Tupel M können von einer Klasse sein, z. B. Brenner-Gradienten für unterschiedliche Längenskalen. Die Schärfefunktionale in dem Tupel M können jedoch auch völlig unterschiedlichen Klassen angehören, zum Beispiel Funktionale auf Basis von Gradienten-Verfahren, spektrale Verfahren, Autokorrelationsverfahren, empirische Verfahren, usw. Wenn als Datenbasis eine Farbaufnahme (z. B. RGB-Kanäle) oder ein Mehrkanalbild vorliegt, dann kann für jeden Kanal separat über ein Schärfefunktional eine Schärfemaß definiert und dem Tupel hinzugefügt werden.

Aus der Betrachtung der Gradienten für die Schärfenfunktionale im Tupel M kann nicht nur bestimmt werden, in welche Richtung der Fokuspunkt liegt, sondern auch, wie bereits erwähnt, ein Rückschluß darauf gezogen werden, ob man sich im Nahfokusbereich oder im Fernfokusbereich befindet. So kann zum Beispiel festgelegt werden, daß man sich im Nahfokusbereich befindet, wenn alle Gradienten Gi in die gleiche Richtung zeigen. Wenn nicht alle Gradienten Gi in die gleiche Richtung zeigen, kann man davon ausgehen, daß man sich im Fernfokusbereich befindet.

Natürlich ist es auch möglich, bei der Entscheidung die Gradienten zu gewichten. So kann zum Beispiel folgende Gewichtung durchgeführt werden

$$G = \sum_i (Wi \cdot Di)$$

Wobei Wi die normierte Gewichtung des i-ten Funktionals und Di die Richtung ist, die sich aus der Betrachtung des Gradienten Gi des i-ten Funktionals ergibt und entweder den Wert -1 oder 1 annimmt. Durch Vergleich mit einem Schwellwert H kann dann entschieden werden, ob man sich im Nahfokusbereich oder im Fernfokusbereich befindet. Je mehr G an -1 oder 1 liegt, desto sicherer ist man, daß man sich im Nahfokusbereich befindet. Wert nahe 0 bedeuten Uneinigkeit und demzufolge deutet dies auf den Fernfokusbereich hin. Man kann also sagen, daß man sich im Nahfokusbereich befindet, wenn der Betrag von G größer als H ist. Wenn der Betrag von G kleiner oder gleich als H ist, befindet man sich im Fernfokusbereich.

Bei dem erfindungsgemäßen Mikroskop kann man die Schrittweite zur Einstellung des optimalen Fokus variieren. Wenn man durch das obige Vorgehen feststellt, daß man sich im Fernfokusbereich befindet, kann man die Schrittweite erhöhen. Damit gelangt man mit weniger Schritten zur optimalen Fokuslage. Eine größere Schrittweite für den Fernfokusbereich führt ferner zu dem Vorteil, daß bei einer größeren Schrittweite der Einfluß der Störungen bei der Gradientenberechnung geringer und somit der Autofokusalgorithmus robuster wird. Sobald man erkennt, daß man sich im Nahfokusbereich befindet, kann die Schrittweite reduziert werden, so daß ein sicheres Detektieren des Hauptmaximums gewährleistet werden kann.

Wenn man aus der Betrachtung der Gradienten zu der Erkenntnis kommt, daß man sich im Fernfokusbereich befindet, können die detektierten Maxima als Nebenmaxima gewertet werden und der Gradientenaufstieg wird nicht abgebrochen.

Sobald man erkennt, daß man sich im Nahfokusbereich befindet, wird der Gradientenaufstieg, wie bereits erwähnt, so lange fortgesetzt, bis man das Maximum überschritten hat. Die Schärfewerte der letzten drei Schritte können dazu benutzt werden, um über einen Parabelfit oder einen Fit einer anderen geeigneten Funktion eine genaue Lage der Fokusposition zu ermitteln. Diese Berechnung kann für jedes Funktional im Tupel durchgeführt werden und die ermittelten Fokuspositionen können gemittelt oder gewichtet gemittelt werden. Natürlich ist es auch möglich, im Nahfokusbereich nicht mehr alle Schärfefunktionale des Tupels M zu verwenden. Insbesondere ist es auch möglich, ein zusätzliches oder nur zumindest ein zusätzliches Schärfefunktional zu verwenden.

Man kann zum Beispiel aus dem Funktionaltupel M für die letzten drei Positionen $z_1$, $z_2$ und $z_3$ um das Maximum herum folgendes effektives Schärfemaß berechnen

$$S_{eff}(z_i) = \sum_j (Wj \cdot Sj(z_j) / \sum_k Wk))$$

mit j = 1, 2 und 3 sowie k = 1, 2 und 3. Für diese drei Stützpunkte $S_{eff}(z_i)$ kann man dann über ein Parabelfit (oder ein Fit einer anderen Funktion) die Maximumposition ermitteln, die als optimal Fokusposition angenommen wird.

Die Gewichte Wk für die Berechnung der Fokusposition können unterschiedlich zu den Gewichten Wi im Fernfokusbereich gewählt werden. Dadurch kann man im Fernfokusbereich diejenigen Funktionale stärker gewichten, die in diesem Bereich höhere Aussagekraft haben. Im Nahfokusbereich kann man dann diejenigen Funktionale stärker gewichten, die vor allem hinsichtlich Präzision und Reproduzierbarkeit günstige Eigenschaften aufweisen.

Die beschriebenen Berechnungen der Schärfenmaße können jeweils auf der gesamten Aufnahme erfolgen oder in beliebig geformten Unterbereichen der Aufnahme. Die Unterbereiche können fest vorgegeben werden oder ein separater Algorithmus liefert eine Festlegung der Unterbereiche.

## Patentansprüche

1. Fokussierverfahren für ein optisches Instrument (1) zum vergrößerten Betrachten eines Objektes (6), wobei das Instrument (1)
   eine Instrumentenoptik (4),
   eine Einstelleinheit (2) zur Einstellung der Fokuslage bei Betrachtung des Objekts (6) mittels der Instrumentenoptik (4), sowie
   eine Aufnahmeeinheit (5), die das Objekt (6) mittels der Instrumentenoptik (4) aufnimmt, aufweist,
   und wobei das Verfahren folgende Schritte umfasst:

   a) Erzeugen von zumindest zwei Aufnahmen mit unterschiedlichen Fokuslagen,
   b) Anwenden von mehreren unterschiedlichen Schärfefunktionen, die jeweils ein absolutes Extremum aufweisen, das die einzustellende optimale Fokuslage für die Betrachtung angibt und das in einem Nahfokusbereich der Schärfefunktion liegt, an dem sich beidseitig ein Fernfokusbereich anschließt, der gegenüber Störungen bei der Aufnahme anfälliger ist als der Nahfokusbereich und dadurch lokale Nebenextrema enthält, jeweils auf jede der zumindest zwei Aufnahmen und Auswerten mit der Fokuslage als Variablen derart, dass für jede Schärfefunktion eine Schärfefunktions-Änderungsrichtung der Fokuslage, um zur optimalen Fokuslage zu gelangen, berechnet wird,

**dadurch gekennzeichnet, dass**
die Schärfefunktions-Änderungsrichtung im Schritt b) mittels einer Gradientenberechnung bestimmt wird, wobei jeweils ein Gradient bestimmt wird, und wobei das Verfahren ferner folgende Schritte umfasst:

   c) Bestimmen einer Hauptänderungsrichtung basierend auf allen Schärfefunktions-Änderungsrichtungen durch eine Mehrheitsentscheidung oder eine gewichtete Mehrheitsentscheidung unter allen Schärfefunktions-Änderungsrichtungen sowie Bestimmen, ob die Fokuslagen der zumindest zwei Aufnahmen im Fernfokusbereich oder Nahfokusbereich liegen, in der Art, dass die Fokuslagen der zumindest zwei Aufnahmen im Nahfokusbereich liegen, wenn alle Schärfefunktions-Änderungsrichtungen in die gleiche Richtung zeigen, und dass die Fokuslagen der zumindest zwei Aufnahmen im Fernfokusbereich liegen, wenn nicht alle Schärfefunktions-Änderungsrichtungen in die gleiche Richtung zeigen,
   d) Verwenden der bestimmten Hauptänderungsrichtung beim weiteren Fokussieren,

wobei die im Schritt c) durchgeführte Bestimmung, ob die Fokuslagen der zumindest zwei Aufnahmen im Fernfokusbereich oder Nahfokusbereich liegen, beim weiteren Fokussieren in der Art berücksichtigt wird, dass beim weiteren Fokussieren die Schrittweite zur Änderung der Fokuslage für weitere Aufnahmen, falls der Fernfokusbereich ermittelt wurde, größer eingestellt wird im Vergleich zu dem Fall, falls der Nahfokusbereich ermittelt wurde.

2. Optisches Instrument zum vergrößerten Betrachten eines Objektes (6), mit einer Instrumentenoptik (4), einer Einstelleinheit (2) zur Einstellung der Fokuslage bei Betrachtung des Objekts (6) mittels der Instrumentenoptik (4),
   einer Aufnahmeeinheit (5), die das Objekt (6) mittels der Instrumentenoptik (4) aufnimmt,
   und einer Auswerte- und Steuereinheit (7, 8),

   A) der zumindest zwei Aufnahmen mit unterschiedlichen Fokuslagen zugeführt sind,
   B) die mehrere unterschiedliche Schärfefunktionen, die jeweils ein absolutes Extremum aufweisen, das die einzustellende optimale Fokuslage für die Betrachtung angibt und das in einem Nahfokusbereich der Schärfefunktion liegt, an dem sich beidseitig ein Fernfokusbereich anschließt, der gegenüber Störungen bei der Aufnahme anfälliger ist als der Nahfokusbereich und dadurch lokale Nebenextrema enthält, jeweils auf jede der zumindest zwei Aufnahmen anwendet und mit der Fokuslage als Variablen derart auswertet, dass für jede Schärfefunktion eine Schärfefunktions-Änderungsrichtung der Fokuslage, um zur optimalen Fokuslage zu gelangen, berechnet wird,

**dadurch gekennzeichnet, dass**
die Auswerte- und Steuereinheit (7, 8) die Schärfefunktions-Änderungsrichtung im Schritt B) mittels einer Gradientenberechnung bestimmt, wobei für jeweils ein Gradient bestimmt wird,

C) eine Hauptänderungsrichtung basierend auf allen Schärfefunktions-Änderungsrichtungen durch eine Mehrheitsentscheidung oder eine gewichtete Mehrheitsentscheidung unter allen Schärfefunktions-Änderungsrichtungen bestimmt, und in der Art bestimmt, ob die Fokuslagen der zumindest zwei Aufnahmen im Fernfokusbereich oder Nahfokusbereich liegen, dass die Fokuslagen der zumindest zwei Aufnahmen im Nahfokusbereich liegen, wenn alle Schärfefunktions-Änderungsrichtungen in die gleiche Richtung zeigen, und dass die Fokuslagen der zumindest zwei Aufnahmen im Fernfokusbereich liegen, wenn nicht alle Schärfefunktions-Änderungsrichtungen in die gleiche Richtung zeigen, und D) beim weiteren Fokussieren die bestimmte Hauptänderungsrichtung verwendet,

wobei die im Schritt C) durchgeführte Bestimmung, ob die Fokuslagen der zumindest zwei Aufnahmen im Fernfokusbereich oder Nahfokusbereich liegen, beim weiteren Fokussieren in der Art berücksichtigt wird, dass beim weiteren Fokussieren die Schrittweite zur Änderung der Fokuslage für weitere Aufnahmen, falls der Fernfokusbereich ermittelt wurde, größer eingestellt wird im Vergleich zu dem Fall, falls der Nahfokusbereich ermittelt wurde.

## Claims

1. Focusing method for an optical instrument (1) for magnified viewing of an object (6), wherein the instrument (1) has an instrument optical unit (4), a setting unit (2) for setting the focus position when viewing the object (6) by means of the instrument optical unit (4), and a recording unit (5) recording the object (6) by means of the instrument optical unit (4), and wherein the method comprises the following steps:

   a) producing at least two recordings with different focus positions,
   b) applying a plurality of different sharpness functions that each have an absolute extremum that indicates the optimum focus position to be set for the viewing and that lies in a near-focus region of the sharpness function that is adjoined on both sides by a far-focus region that is more susceptible to disturbances during the recording than the near-focus region and therefore contains local secondary extrema, in each case to each of the at least two recordings and evaluating with the focus position as variable such that for each sharpness function a sharpness function change direction of the focus position for arriving at the optimum focus position is calculated,

   **characterized in that**
   the sharpness function change direction in step b) is determined by means of a gradient calculation, wherein in each case a gradient is determined, and wherein the method furthermore comprises the following steps:

   c) determining a main change direction based on all sharpness function change directions by a majority rule or weighted majority rule from among all sharpness change directions, and determining whether the focus positions of the at least two recordings lie in the far-focus region or near-focus region in the manner such that the focus positions of the at least two recordings lie in the near-focus region if all sharpness function change directions point in the same direction, and that the focus positions of the at least two recordings lie in the far-focus region if not all sharpness function change directions point in the same direction,
   d) using the determined main change direction during further focusing, wherein the determination performed in step c) of whether the focus positions of the at least two recordings lie in the far-focus region or near-focus region is taken into account during further focusing in the manner such that, during further focusing, the step width for changing the focus position for further recordings is set larger if the far-focus region has been ascertained than if the near-focus region has been ascertained.

2. Optical instrument for magnified viewing of an object (6), having
an instrument optical unit (4),
a setting unit (2) for setting the focus position when viewing the object (6) by means of the instrument optical unit (4),
a recording unit (5) that records the object (6) by means of the instrument optical unit (4), and an evaluation and control unit (7, 8),

A) to which at least two recording with different focus positions are fed,

B) that applies a plurality of different sharpness functions that each have an absolute extremum that indicates the optimum focus position to be set for the viewing and that lies in a near-focus region of the sharpness function that is adjoined on both sides by a far-focus region that is more susceptible to disturbances during the recording than the near-focus region and therefore contains local secondary extrema, in each case to each of the at least two recordings and evaluates with the focus position as variable such that for each sharpness function a sharpness function change direction of the focus position for arriving at the optimum focus position is calculated,

**characterized in that**
the evaluation and control unit (7, 8)
determines the sharpness function change direction in step B) by means of a gradient calculation, wherein in each case a gradient is determined,

C) a main change direction is determined based on all sharpness function change directions by a majority rule or weighted majority rule from among all sharpness change directions, and determines whether the focus positions of the at least two recordings lie in the far-focus region or near-focus region in the manner such that the focus positions of the at least two recordings lie in the near-focus region if all sharpness function change directions point in the same direction, and that the focus positions of the at least two recordings lie in the far-focus region if not all sharpness function change directions point in the same direction, and

D) uses the determined main change direction during further focusing, wherein the determination performed in step C) of whether the focus positions of the at least two recordings lie in the far-focus region or near-focus region is taken into account during further focusing in the manner such that, during further focusing, the step width for changing the focus position for further recordings is set larger if the far-focus region has been ascertained than if the near-focus region has been ascertained.

## Revendications

1. Procédé de réglage de la mise au point pour un instrument optique (1) destiné à l'observation grossie d'un objet (6), l'instrument (1) possédant une optique d'instrument (4),
une unité de réglage (2) destinée à régler la position de mise au moins lors de l'observation de l'objet (6) au moyen de l'optique d'instrument (4) et aussi une unité d'enregistrement (5) qui enregistre l'objet (6) au moyen de l'optique d'instrument (4),
et le procédé comprenant les étapes suivantes :

a) la génération d'au moins deux enregistrements avec des positions de mise au point différentes,

b) l'utilisation de plusieurs fonctions de netteté différentes, qui présentent respectivement un extremum absolu qui indique la position de mise au point optimale à régler et qui se trouve dans une zone de mise au point proche de la fonction de netteté, de chaque côté de laquelle se rattache une zone de mise au point éloignée, qui est plus sensible aux perturbations lors de l'enregistrement que la zone de mise au point proche et contient de ce fait des extrema voisins locaux, respectivement sur chacun des au moins deux enregistrements et l'interprétation avec la position de mise au point en tant que variable de telle sorte qu'une direction de modification de la fonction de netteté de la position de mise au point est calculée pour chaque fonction de netteté afin de parvenir à la position de mise au point optimale,

**caractérisé en ce que**
la direction de modification de la fonction de netteté à l'étape b) est déterminée au moyen d'un calcul de gradient, un gradient étant respectivement déterminé,
et le procédé comprenant en outre les étapes suivantes :

c) la détermination d'une direction de modification principale en se basant sur toutes les directions de modification de la fonction de netteté par une décision majoritaire ou une décision majoritaire pondérée parmi toutes les directions de modification de la fonction de netteté et aussi la détermination si les positions de mise au point des au moins deux enregistrements se trouvent dans la zone de mise au point éloignée ou la zone de mise au point proche, de sorte que les positions de mise au point des au moins deux enregistrements se trouvent dans la zone de mise au point proche lorsque toutes les directions de modification de la fonction de netteté pointent dans la même direction, et que les positions de mise au point des au moins deux enregistrements se trouvent dans la zone de mise au point éloignée lorsque les directions de modification de la fonction de netteté ne pointent pas toutes dans la même direction,

d) l'utilisation de la direction de modification principale déterminée lors des autres mises au point, la détermination effectuée à l'étape c) si les positions de mise au point des au moins deux enregistrements se trouvent dans la zone de mise au point éloignée ou proche étant prise en compte lors d'autres mises au point de telle sorte que lors des autres mises au point, le pas de progression destiné à la modification de la position de mise au point pour d'autres enregistrements, dans le cas où la zone de mise au point éloignée a été identifiée, est réglé plus grand par rapport au cas où la zone de mise au point proche a été identifiée.

2. Instrument optique destiné à l'observation grossie d'un objet (6), comprenant une optique d'instrument (4), une unité de réglage (2) destinée à régler la position de mise au moins lors de l'observation de l'objet (6) au moyen de l'optique d'instrument (4), une unité d'enregistrement (5) qui enregistre l'objet (6) au moyen de l'optique d'instrument (4), et une unité d'interprétation et de commande (7, 8),

A) à laquelle sont acheminés au moins deux enregistrements avec des positions de mise au point différentes,

B) qui contient plusieurs fonctions de netteté différentes, qui présentent respectivement un extremum absolu qui indique la position de mise au point optimale à régler et qui se trouve dans une zone de mise au point proche de la fonction de netteté, de chaque côté de laquelle se rattache une zone de mise au point éloignée, qui est plus sensible aux perturbations lors de l'enregistrement que la zone de mise au point proche et contient de ce fait des extrema voisins locaux, respectivement sur chacun des au moins deux enregistrements, et les interprète avec la position de mise au point en tant que variable de telle sorte qu'une direction de modification de la fonction de netteté de la position de mise au point est calculée pour chaque fonction de netteté afin de parvenir à la position de mise au point optimale,

**caractérisé en ce que**
l'unité d'interprétation et de commande (7, 8) détermine la direction de modification de la fonction de netteté à l'étape B) au moyen d'un calcul de gradient, un gradient étant respectivement déterminé,

C) détermine une direction de modification principale en se basant sur toutes les directions de modification de la fonction de netteté par une décision majoritaire ou une décision majoritaire pondérée parmi toutes les directions de modification de la fonction de netteté et détermine si les positions de mise au point des au moins deux enregistrements se trouvent dans la zone de mise au point éloignée ou la zone de mise au point proche, de sorte que les positions de mise au point des au moins deux enregistrements se trouvent dans la zone de mise au point proche lorsque toutes les directions de modification de la fonction de netteté pointent dans la même direction, et que les positions de mise au point des au moins deux enregistrements se trouvent dans la zone de mise au point éloignée lorsque les directions de modification de la fonction de netteté ne pointent pas toutes dans la même direction, et

D) utilise la direction de modification principale déterminée lors des autres mises au point,

la détermination effectuée à l'étape C) si les positions de mise au point des au moins deux enregistrements se trouvent dans la zone de mise au point éloignée ou proche étant prise en compte lors d'autres mises au point de telle sorte que lors des autres mises au point, le pas de progression destiné à la modification de la position de mise au point pour d'autres enregistrements, dans le cas où la zone de mise au point éloignée a été identifiée, est réglé plus grand par rapport au cas où la zone de mise au point proche a été identifiée.

Fig. 1

S1(z)

P4          P2          P3

S1$_{max}$

S1

C

z$_{N1}$          z$_{Fokus}$          z$_{N2}$          z

Fig. 2

S1(z)

C

S1

S1$_{ideal}$

z$_0$          z$_1$          z

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0075709 A1
- US 20090207298 A1
- US 20080151097 A1
- FR 2605751 A1
- EP 0111635 A2

**In der Beschreibung aufgeführte Nicht-Patentliteratur**

- **GROEN et al.** A Comparison of Different Focus Functions for Use in Autofocus Algorithms. *Cytometrie,* 1985, vol. 6, 81-91
- **DÄHNE et al.** A microscope focusing technique for a digital image analysing system. *Optik, Wissenschaftliche Verlagsgesellschaft mbH,* 01. Mai 1980, vol. 55 (4), 437-448